# EUROPEAN PATENT APPLICATION

(11) **EP 4 760 479 A1**
(43) Date of publication of application: **17.06.2026**
(21) Application number: 25809037.2
(22) Date of filing: 24.04.2025
(51) Int. Cl.: G06F 3/14

(54) **CROSS-APPARATUS CONTROL METHOD, ELECTRONIC APPARATUS AND STORAGE MEDIUM**

(30) Priority: 08.05.2024 CN 202410563401
(71) Applicant: Guangzhou Shizhen Information Technology Co., Ltd., Guangzhou, Guangdong 510663 (CN)
(72) Inventor: LIN, Jinhao, Guangzhou, Guangdong 510663 (CN)
(74) Representative: Grünecker Patent- und Rechtsanwälte PartG mbB
(86) International application number: PCT/CN2025/090969
(87) International publication number: WO 2025/232564

(57) **Abstract**

Embodiments of the present application provide a cross-device control method, an electronic device, and a storage medium. By using an existing data transmission channel in a screen sharing connection state, first peripheral operation data generated from an interactive operation by a user on a peripheral device compatible with a screen sharing display device is sent to a screen sharing device. The screen sharing device forwards the first peripheral operation data to a screen sharing source device. A screen sharing assistance application in the screen sharing source device converts the first peripheral operation data based on a hardware parameter of the screen sharing display device and a hardware parameter of the screen sharing source device to obtain second peripheral operation data adapted to its own hardware state and then sends the second peripheral operation data to the screen sharing device. The screen sharing device encapsulates the second peripheral operation data according to a USB HID protocol to obtain a HID packet that is directly usable by the screen sharing source device, and sends the HID packet to the screen sharing source device for response. This enables cross-device control of the screen sharing source device when the presentation is centered on the screen sharing display device, ensuring the continuity of multi-person communication and improving the effect of information transmission.

## Description

The present application claims priority to Chinese Patent Application No. 202410563401.1, filed with the China National Intellectual Property Administration on May 8, 2024 and entitled "CROSS-DEVICE CONTROL METHOD, ELECTRONIC DEVICE, AND STORAGE MEDIUM", which is incorporated herein by reference in its entirety.

### Technical Field

The present application relates to the technical field of communications, and in particular to a cross-device control method, an electronic device, and a storage medium.

### Background Art

With the continuous development and widespread adoption of information technology, various types of electronic devices have emerged, and ways in which the electronic devices are connected have also become increasingly diverse. For example, in a conference room built on information technology, it is usually equipped with a plurality of electronic devices including an interactive flat panel, a microphone, a speaker, a mouse, a keyboard, etc. Among the plurality of electronic devices, the interactive flat panel is the center, with other electronic devices interconnected as peripheral devices to work together, enabling the collection, transmission, and presentation of information during multi-person communication.

When the interactive flat panel is used to present information, an information source is probably not the interactive flat panel, but other terminal devices present at a meeting venue. Screen sharing technology is used to reproduce information from an information screen sharing source device on a screen sharing display device. In this application scenario, the interactive flat panel is used as the screen sharing display device, and other terminal devices are screen sharing source devices. To achieve information transmission between the screen sharing source devices and the screen sharing display device, a dedicated intermediate device is usually needed to create a data channel for screen sharing data transmission between the screen sharing source devices and the screen sharing display device. Such an intermediate device, which is specially used to create a data channel between different devices for information reproduction, can be named a screen casting device, a screen sharing device, a wireless screen casting device, a wireless screen sharing device, etc. The name screen sharing device is used hereinafter.

The inventor has found through analysis of a working process of the existing screen sharing device that, during information presentation, a focus device for information presentation is the screen sharing display device, but a source that determines information presentation content is a screen sharing source device. In multi-person communication scenarios, when presenting information based on a presentation prepared in advance, a presenter can only center on the screen sharing source device, or move between the screen sharing source device and the screen sharing display device, to operate and switch the information presentation content on the screen casting source device. The presentation cannot be kept centered on the screen sharing display device as the information presentation focus, which affects the continuity of multi-person communication and reduces the effect of information transmission.

### Summary of the Invention

The present application provides a cross-device control method, an electronic device, and a storage medium to solve the technical problem that in the existing screen sharing process, the presentation cannot be kept centered on a screen sharing display device as an information presentation focus, which affects the continuity of multi-person communication and reduces the effect of information transmission.

In a first aspect, an embodiment of the present application provides a cross-device control method, used for a screen sharing device. The cross-device control method includes:
in a screen sharing connection state, receiving, over a wireless network, first peripheral operation data sent by a screen sharing display device, where the first peripheral operation data is generated by a peripheral device of the screen sharing display device;
sending the first peripheral operation data to a screen sharing source device through a wired interface, such that a screen sharing assistance application of the screen sharing source device converts the first peripheral operation data into second peripheral operation data based on a hardware parameter of the screen sharing display device and a hardware parameter of the screen sharing source device and sends the second peripheral operation data to the screen sharing device;
receiving the second peripheral operation data, and encapsulating the second peripheral operation data based on a USB HID protocol to obtain a HID packet; and
sending the HID packet to the screen sharing source device, such that the screen sharing source device responds based on the HID packet.

As described above, by using an existing data transmission channel in the screen sharing connection state, the first peripheral operation data generated from an interactive operation by a user on a peripheral device compatible with the screen sharing display device is sent to the screen sharing device. The screen sharing device forwards the first peripheral operation data to the screen sharing source device. The screen sharing assistance application in the screen sharing source device converts the first peripheral operation data based on the hardware parameter of the screen sharing display device and the hardware parameter of the screen sharing source device to obtain the second peripheral operation data adapted to its own hardware state and then sends the second peripheral operation data to the screen sharing device. The screen sharing device encapsulates the second peripheral operation data according to the USB HID protocol to obtain the HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

The cross-device control method further includes:
upon the establishment of a screen sharing connection, obtaining the hardware parameter of the screen sharing display device, and sending the hardware parameter of the screen sharing display device to the screen sharing source device for caching.

As described above, the screen sharing source device caches the hardware parameter of the screen sharing display device, and can perform a quick conversion based on its own hardware parameter and the cached hardware parameter upon the first peripheral operation data is received.

The first peripheral operation data additionally carries the hardware parameter of the screen sharing display device.

As described above, the screen sharing source device obtains the hardware parameter of the screen sharing display device upon obtaining the first peripheral operation data, and then performs a quick conversion accordingly in combination with its own hardware parameter.

The hardware parameter includes a display parameter.

As described above, a conversion corresponding to the display parameter allows to ensure a corresponding accurate response to an operation detected between two devices with different display screen sizes.

In a second aspect, an embodiment of the present application provides a cross-device control method, used for a screen sharing source device. The cross-device control method includes:
in a screen sharing connection state, receiving first peripheral operation data from a screen sharing device through a wired interface, where the first peripheral operation data is received by the screen sharing device from a screen sharing display device through a wireless network connection, and the first peripheral operation data is generated by a peripheral device of the screen sharing display device;
converting the first peripheral operation data based on a hardware parameter of the screen sharing display device and a hardware parameter of the screen sharing source device to obtain second peripheral operation data and send the second peripheral operation data to the screen sharing device, such that the screen sharing device encapsulates the second peripheral operation data based on a USB HID protocol to obtain a HID packet and send the HID packet to the screen sharing source device; and
responding based on the HID packet.

As described above, by using an existing data transmission channel in the screen sharing connection state, the first peripheral operation data generated from an interactive operation by a user on a peripheral device compatible with the screen sharing display device is sent to the screen sharing device. The screen sharing device forwards the first peripheral operation data to the screen sharing source device. The screen sharing assistance application in the screen sharing source device converts the first peripheral operation data based on the hardware parameter of the screen sharing display device and the hardware parameter of the screen sharing source device to obtain the second peripheral operation data adapted to its own hardware state and then sends the second peripheral operation data to the screen sharing device. The screen sharing device encapsulates the second peripheral operation data according to the USB HID protocol to obtain the HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

The cross-device control method further includes:
upon the establishment of a screen sharing connection, obtaining and caching the hardware parameter obtained by the screen sharing device from the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device includes:
   converting the first peripheral operation data based on a conversion relationship between the cached hardware parameter and the hardware parameter of the screen sharing source device to obtain the second peripheral operation data and send the second peripheral operation data to the screen sharing device.

As described above, the screen sharing source device caches the hardware parameter of the screen sharing display device, and can perform a quick conversion based on its own hardware parameter and the cached hardware parameter upon the first peripheral operation data is received.

The first peripheral operation data additionally carries the hardware parameter of the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device includes:
converting the first peripheral operation data based on a conversion relationship between the additionally carried hardware parameter and the hardware parameter of the screen sharing source device to obtain the second peripheral operation data and send the second peripheral operation data to the screen sharing device.

As described above, a conversion corresponding to the display parameter allows to ensure a corresponding accurate response to an operation detected between two devices with different display screen sizes.

In a third aspect, an embodiment of the present application provides an electronic device. The electronic device includes:
one or more processors; and
a memory, configured to store one or more computer programs, where
when the one or more computer programs are executed by the one or more processors, the electronic device is caused to implement the cross-device control method according to any one of the first aspect or the second aspect.

According to a fourth aspect, an embodiment of the present application provides a computer-readable storage medium having a computer program stored thereon. When the computer program is executed by a processor, the cross-device control method according to any one of the first aspect or the second aspect is implemented.

The electronic device of the third aspect and the computer-readable storage medium of the fourth aspect can be used to perform the cross-device control method provided in any of the above-described embodiments, and have corresponding functions and beneficial effects.

### Brief Description of the Drawings

To describe the technical solutions in embodiments of the present application or in the related art more clearly, the following briefly describes the accompanying drawings for describing the embodiments or the related art. It is clear that the accompanying drawings in the following description are merely some embodiments of the present application, and those of ordinary skill in the art may still derive other drawings from these accompanying drawings without creative efforts.
FIG. 1 is a flowchart of a cross-device control method according to an embodiment of the present application;
FIG. 2 is a schematic diagram of an application scenario of an interactive flat panel and a screen sharing device;
FIG. 3 is a schematic diagram of data processing and transmission during implementation of the cross-device control method shown in FIG. 1;
FIG. 4 is a flowchart of another cross-device control method according to an embodiment of the present application;
FIG. 5 is a flowchart of still another cross-device control method according to an embodiment of the present application; and
FIG. 6 is a schematic structural diagram of an electronic device according to an embodiment of the present application.

### Detailed Description of Embodiments

To make the objectives, technical solutions, and advantages of the present application clearer, the embodiments of the present application will be described in further detail below with reference to the accompanying drawings. It can be understood that the specific embodiments described herein are used for explaining the present application and not for limiting the present application. In addition, it should be noted that, for ease of description, the accompanying drawings show only the parts related to the present application, instead of the entire structure.

It should be noted that, due to limited space, the specification of the present application does not exhaustively list all optional implementations. Those skilled in the art should be able to conceive after reading the specification of the present application that, as long as the technical features do not contradict each other, any combination of the technical features can form an optional implementation.

The embodiments are described in detail below.

During information presentation, a focus device for information presentation is the screen sharing display device, but a source that determines information presentation content is a screen sharing source device. In multi-person communication scenarios, when presenting information based on a presentation prepared in advance, a presenter can only center on the screen sharing source device, or move between the screen sharing source device and the screen sharing display device, to operate and switch the information presentation content on the screen casting source device. The presentation cannot be kept centered on the screen sharing display device as the information presentation focus, which affects the continuity of multi-person communication and reduces the effect of information transmission. For example, during the information presentation, communication assistance functions such as handwritten annotations on the screen sharing display device need to be used on the screen sharing display device. To switch presented information, one can only leave from the screen sharing display device to the screen sharing source device for operation. Moving back and forth between the devices located at two different positions may obviously affect the continuity of multi-person communication and reduce the effect of information transmission.

In order to solve the above technical problems, an embodiment of the present application proposes a cross-device control method. By using an existing data transmission channel in a screen sharing connection state, first peripheral operation data generated from an interactive operation by a user on a peripheral device compatible with a screen sharing display device is sent to a screen sharing device. The screen sharing device forwards the first peripheral operation data to a screen sharing source device. A screen sharing assistance application in the screen sharing source device converts the first peripheral operation data based on a hardware parameter of the screen sharing display device and a hardware parameter of the screen sharing source device to obtain second peripheral operation data adapted to its own hardware state and then sends the second peripheral operation data to the screen sharing device. The screen sharing device encapsulates the second peripheral operation data according to a USB HID protocol to obtain a HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

The screen sharing display device to which this solution applies is, for example, an interactive flat panel. The interactive flat panel may be an integrated device that operates content displayed on a display screen and implements human-computer interaction operations through touch technology. The interactive flat panel integrates one or more functions such as a projector, an electronic whiteboard, a projection screen, a speaker, a television, a video conferencing terminal, and a wireless router. The interactive flat panel may be a flat surface, a curved surface, or a plurality of flat surfaces that are spliced together.

Typically, an interactive flat panel is installed with at least one operating system, including but not limited to Android, Linux, Windows, and Huawei HarmonyOS. The operating system is used to control and coordinate the interactive flat panel and peripheral devices, such that various independent hardware in the interactive flat panel can work together as a stable unified system. The interactive flat panel includes at least one display screen. For example, the interactive flat panel is equipped with a display screen having a touch function, that is, a touch-sensitive display screen. The touch-sensitive display screen may be an infrared display screen, a capacitive display screen, a resistive display screen, an electromagnetic display screen, a pressure-sensitive display screen, etc. On the display screen having a touch function, a user can perform touch operations by touching the display screen with their fingers or a stylus. Correspondingly, the interactive flat panel detects a touch position and responds based on the touch position to implement the touch function. When different touch sensing modules are used on the display screen having a touch function, original tactile signals acquired by the touch sensing modules are different, and touch signals obtained after conversion are not exactly the same. In the interactive flat panel, to enable quick access to frequently used functions without leaving a current page, sidebars are usually provided on two sides of the display screen. A plurality of functional controls are displayed on the sidebars, such as a camera control for starting a camera and a write control for quickly starting writing.

For the infrared display screen, a touch sensing module is an infrared touch frame. A tactile signal acquired by the touch sensing module may include a signal indicating that infrared rays are blocked. A touch signal obtained after conversion may include a position touch signal, and the position touch signal may include an X coordinate and a Y coordinate of a touch position. For the capacitive display screen, a touch sensing module is a capacitive touchpad. A tactile signal acquired by the touch sensing module may include a current flowing through each electrode of a touch screen. A touch signal obtained after conversion may include a position touch signal, and the position touch signal may include an X coordinate and a Y coordinate of a touch position. For the resistive display screen, the touch sensing module is a resistive touchpad. A tactile signal acquired by the touch sensing module may include a voltage at a touch position. A touch signal obtained after conversion may include a position touch signal, and the position touch signal may include an X coordinate and a Y coordinate of a touch position. For the electromagnetic display screen, a touch sensing module is an electromagnetic plate. A tactile signal acquired by the touch sensing module may include a magnetic flux variation and a frequency of a received electromagnetic signal. A touch signal obtained after conversion may include a position touch signal corresponding to the magnetic flux variation and a pressure-sensitive signal corresponding to the frequency. The position touch signal may include an X coordinate and a Y coordinate of a touch position. The pressure-sensitive signal may include a pressure value. For the pressure-sensitive display screen, a touch sensing module is a pressure sensor. A tactile signal acquired by the touch sensing module may include a pressure signal. A touch signal obtained after conversion may include a position touch signal, and the position touch signal may include an X coordinate and a Y coordinate of a touch position.

The interactive flat panel described in the embodiments of the present application may also be referred to as an all-in-one machine, a smart flat panel, a conference flat panel, a conference board, a whole machine, etc. It should be understood that electronic devices used in multi-person communication scenarios to support information presentation, recording, and sharing functions in a process of multi-person communication, and having a compatible screen sharing device for sending screen sharing data, are all within the scope of the interactive flat panel.

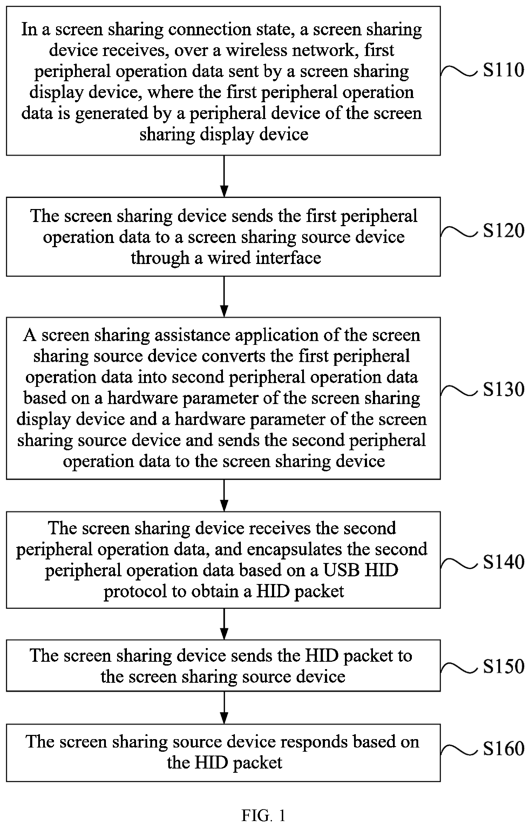

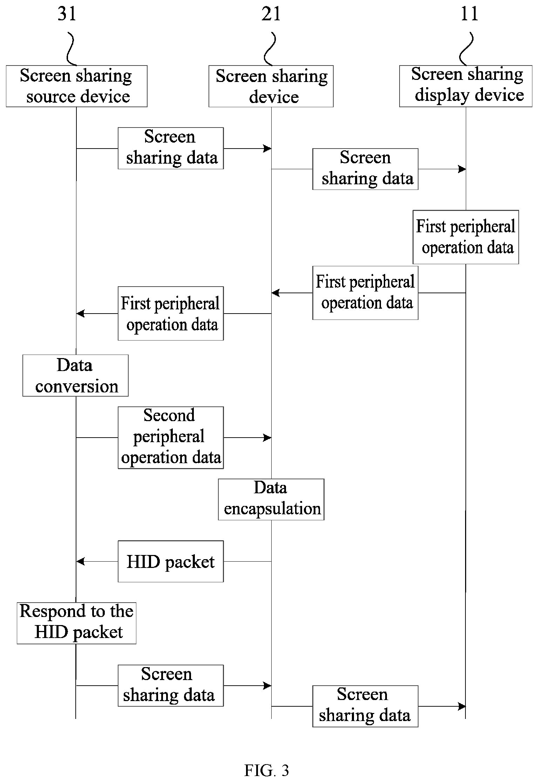

FIG. 1 is a flowchart of a cross-device control method according to an embodiment of the present application. As shown in FIG. 1, the cross-device control method includes, but is not limited to, steps S110 to S160. Steps S110 to S160 and the supplementary description centered on steps S110 to S150 are a comparative description, from a comprehensive perspective of a screen sharing source device 31, a screen sharing device 21, and a screen sharing display device 11, of data processing processes performed by the screen sharing display device 11 and the screen sharing source device 31 separately or together during a cross-device control process of the screen sharing source device by the screen sharing display device. In addition, reference may be made to FIG. 3 to understand data processing and transmission processes in the screen sharing source device 31, the screen sharing device 21, and the screen sharing display device 11 when implementing this embodiment of the present application.

Step S110: In a screen sharing connection state, the screen sharing device receives, over a wireless network, first peripheral operation data sent by the screen sharing display device, where the first peripheral operation data is generated by a peripheral device of the screen sharing display device.

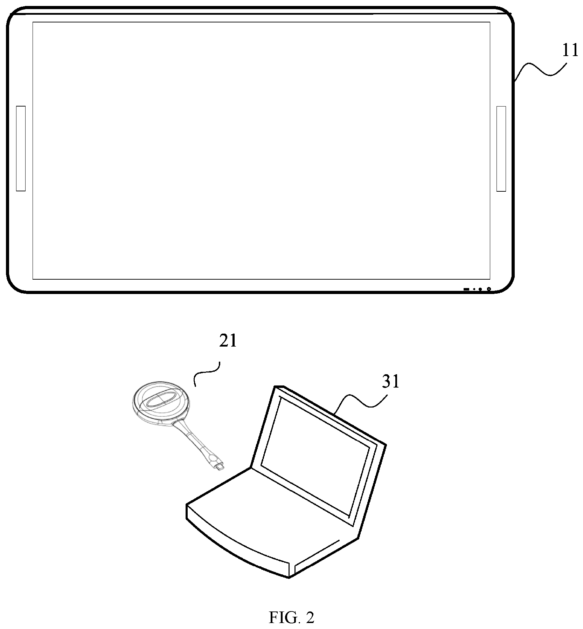

In the screen sharing scenario, as shown in FIG. 2, the screen sharing source device 31, the screen sharing device 21, and the screen sharing display device 11 are usually included. When a screen sharing function is needed to support multi-person communication, the user first plugs the screen sharing device 21 into the screen sharing source device 31 via a wired interface (such as a USB Type-A interface or a USB Type-C interface), to complete a physical connection between the screen sharing device 21 and the screen sharing source device 31 and the establishment of a data transmission channel. The screen sharing device 21 further establishes, by using network connection information obtained by pairing with the screen sharing display device 11 in advance, a wireless network connection to the screen sharing display device 11 based on a wireless hotspot provided by the screen sharing display device 11, thereby establishing a screen sharing connection from the screen sharing source device 31 to the screen sharing display device 11 via the screen sharing device 21. After being connected to the screen sharing source device 31 via the wired interface, the screen sharing device 21 may directly trigger the screen sharing source device 31 to start its own installed screen sharing assistance application based on a device type of the screen sharing device 21, or load the screen sharing assistance application to the screen sharing source device 31 from a storage path specified in the screen sharing device 21.

In the screen sharing connection state, as shown in FIG. 3, the most basic data transmission requirement is that, the screen sharing source device 31 first sends screen sharing data generated based on its own displayed picture and played audio to the screen sharing device 21 through the wired interface, and then the screen sharing device 21 sends the screen sharing data to the screen sharing display device 11 for output. It should be understood that, when the user does not terminate or pause screen sharing, screen sharing data is in a real-time generation and continuous transmission process that is independent of an operation of the peripheral device of the screen sharing display device 11.

During a screen sharing process, the user may operate the peripheral device of the screen sharing display device 11, and operation data is correspondingly generated when various operation signals are detected. For example, the screen sharing display device 11 may be equipped with peripheral devices such as a touch module, a mouse, and a keyboard. Each of the peripheral devices may generate corresponding operation data, for example, operation data generated correspondingly when the touch module detects a touch position, a touch duration, and other information, and operation data generated correspondingly when the mouse and the keyboard detect the triggering of specific buttons or keys. The screen sharing display device 11 can also respond to operation data. However, in the screen sharing connection state, if a picture currently displayed on top is from the screen sharing source device 31, it indicates that the operation needs to be responded to by the screen sharing source device 31 that actually generates the picture. Correspondingly, the operation data is sent to the screen sharing device 21 over the wireless network. To distinguish between processing results of the same data in different stages during subsequent processing, the operation data is defined herein as the first peripheral operation data.

Step S120: The screen sharing device sends the first peripheral operation data to the screen sharing source device through the wired interface.

As shown in FIG. 3, the screen sharing device 21 does not process the first peripheral operation data, but directly sends the first peripheral operation data to the screen sharing source device 31 through the wired interface used to establish a screen sharing connection.

Step S130: A screen sharing assistance application of the screen sharing source device converts the first peripheral operation data into second peripheral operation data based on a hardware parameter of the screen sharing display device and a hardware parameter of the screen sharing source device and sends the second peripheral operation data to the screen sharing device.

Peripheral operation data varies with peripheral devices. Physical data content of some peripheral operation data, for example, the peripheral operation data generated correspondingly for button or key signals of the mouse and the keyboard, may be directly responded to in all electronic devices. Button or key signals of a left mouse button and a Del key of the keyboard may be directly responded to in different electronic devices as defined by the system. Some peripheral operation data cannot be directly responded to in all electronic devices. For example, the peripheral operation data generated by the touch module actually records a touch position. Different electronic devices correspond to different touch screen sizes, and the same position may point to different objects when displaying the same picture. To ensure that the peripheral operation data generated by the touch module of the screen sharing display device can be correctly responded to by the screen sharing source device of different sizes, it is necessary to convert the first peripheral operation data generated by the touch module into the second peripheral operation data based on a display parameter of the screen sharing source device and a display parameter of the screen sharing display device. Certainly, considering that peripheral operation data of various peripheral devices may have different response methods in different electronic devices, step S130 is not limited to the first peripheral operation data generated by the touch module, but the first peripheral operation data generated by all the peripheral devices needs to be converted. Certainly, the conversion of physical data in the first peripheral operation data may remain unchanged when the response method is the same.

For conversion processes related to the display parameters, if an aspect ratio of the screen sharing source device and an aspect ratio of the screen sharing display device are the same, the touch position may be directly converted proportionally. For example, the screen sharing source device is 960×540, and the screen sharing display device is 3840×2160. If the aspect ratios of the screen sharing source device and the screen sharing display device are different, the screen sharing mode (such as in full screen or proportionally) needs to be further considered. The specific processing method is also based on proportional conversion, but it is necessary to determine whether black bars on two sides of the screen sharing display device need to be considered during screen sharing display. In general, a conversion corresponding to the display parameter allows to ensure a corresponding accurate response to an operation detected between two devices with different display screen sizes.

In one optional implementation, upon the establishment of a screen sharing connection, the screen sharing device obtains the hardware parameter of the screen sharing display device, and sends the hardware parameter of the screen sharing display device to the screen sharing source device for caching. Correspondingly, upon the establishment of a screen sharing connection, the screen sharing source device obtains and caches the hardware parameter obtained by the screen sharing device from the screen sharing display device. During data conversion, the screen sharing source device converts the first peripheral operation data based on a conversion relationship between the cached hardware parameter and the hardware parameter of the screen sharing source device to obtain the second peripheral operation data and send the second peripheral operation data to the screen sharing device. The screen sharing source device caches the hardware parameter of the screen sharing display device, and can perform a quick conversion based on its own hardware parameter and the cached hardware parameter upon the first peripheral operation data is received.

In another optional implementation, the hardware parameter of the screen sharing display device is already additionally carried when the screen sharing display device sends the first peripheral operation data. During data conversion, the screen sharing source device converts the first peripheral operation data based on a conversion relationship between the additionally carried hardware parameter and the hardware parameter of the screen sharing source device to obtain the second peripheral operation data and send the second peripheral operation data to the screen sharing device. A conversion corresponding to the display parameter allows to ensure a corresponding accurate response to an operation detected between two devices with different display screen sizes.

Corresponding to the data sending and receiving process of the screen sharing device, in the screen sharing connection state, the screen sharing source device receives the first peripheral operation data from the screen sharing device through the wired interface, where the first peripheral operation data is received by the screen sharing device from the screen sharing display device through the wireless network connection, and the first peripheral operation data is generated by the peripheral device of the screen sharing display device. The screen sharing source device converts the first peripheral operation data based on the hardware parameter of the screen sharing display device and the hardware parameter of the screen sharing source device to obtain the second peripheral operation data and send the second peripheral operation data to the screen sharing device, such that the screen sharing device encapsulates the second peripheral operation data based on a USB HID (human interface device) protocol to obtain a HID packet and sends the HID packet to the screen sharing source device.

Step S140: The screen sharing device receives the second peripheral operation data, and encapsulates the second peripheral operation data based on a USB HID protocol to obtain a HID packet.

After receiving the second peripheral operation data, the screen sharing device encapsulates the second peripheral operation data based on the USB HID protocol. In embodiments of the present application, the first peripheral operation data, the second peripheral operation data, and the HID packet are essentially results of encoding, using different data packet protocols, physical data, i.e. operation data generated by the user by operating the peripheral device of the screen sharing display device. There are corresponding encoding and decoding processes between various conversions, which are the basic implementation of data transmission, and will not be elaborated herein.

Step S150: The screen sharing device sends the HID packet to the screen sharing source device.

A wired connection is established between the screen sharing device and the screen sharing source device, such as a wired connection established through a USB Type-A interface or a USB Type-C interface. The HID packet is correspondingly sent to the screen sharing source device through the wired connection.

Step S160: The screen sharing source device responds based on the HID packet.

For the screen sharing source device, the screen sharing assistance application may just be a plugin to help the screen sharing device to implement a screen sharing function. The screen sharing assistance application mainly implements audio and video data processing related to screen sharing and may not have the ability to communicate with the various interfaces of the screen sharing source device. For the screen sharing source device, the HID packet is data that can be directly processed and allocated by an operating system. Therefore, when the screen sharing device encapsulates the second peripheral operation data into an HID packet and sends the HID packet to the screen sharing source device through the wired interface, the operating system of the screen sharing source device can quickly identify the data used for interactive control, and then allocate and respond to the data based on a conventional processing flow. This means that implementing this solution only requires adding the corresponding data sending and conversion to an existing screen sharing-related application. Compared to the screen sharing device directly forwarding the first peripheral operation data to the screen sharing source device for processing and response, there is no need to design connection and sending logic of a system data interface between the screen sharing assistance application and the screen sharing source device. In addition, possible repeated conversions are handled by the screen sharing source device with a powerful data processing capability, effectively reducing the data processing load on the screen sharing device.

It should be understood that, in the screen sharing connection state, the screen sharing data is in a real-time generation and continuous transmission process that is independent of an operation of the peripheral device of the screen sharing display device 11. The screen sharing source device 31 responds based on the HID packet, which may cause changes in a display picture and/or audio output. These changes are directly reflected in the output of the screen sharing display device 11 based on screen sharing. This operation and the changes in the corresponding output are an operation on the content displayed on the screen sharing display device 11 in terms of user experience, and correspondingly, the screen sharing display device 11 completes the response. However, actual underlying response logic is that the screen sharing display device 11 feeds back peripheral operation data generated by a corresponding user operation to the screen sharing source device 31 for response through the embodiment of the present application. A response result of the screen sharing source device 31 is presented to the screen sharing display device 11 by using the basic screen sharing function. Screen sharing data at the bottom of FIG. 3 does not indicate that the screen sharing resumes only after the process of processing the peripheral operation data by the intermediate device ends. This is only used to emphasize that the operation performed by the user on the peripheral device of the screen sharing display device 11 will be fed back to the screen sharing source device 31 for response, and ultimately cause output content of the screen sharing display device 11 to change.

As described above, by using an existing data transmission channel in the screen sharing connection state, the first peripheral operation data generated from an interactive operation by a user on a peripheral device compatible with the screen sharing display device is sent to the screen sharing device. The screen sharing device forwards the first peripheral operation data to the screen sharing source device. The screen sharing assistance application in the screen sharing source device converts the first peripheral operation data based on the hardware parameter of the screen sharing display device and the hardware parameter of the screen sharing source device to obtain the second peripheral operation data adapted to its own hardware state and then sends the second peripheral operation data to the screen sharing device. The screen sharing device encapsulates the second peripheral operation data according to the USB HID protocol to obtain the HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

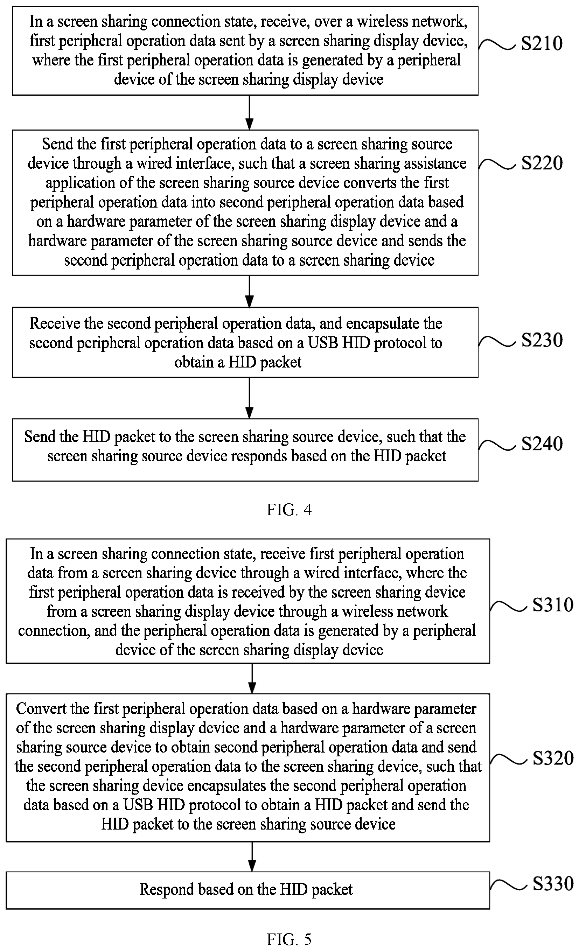

FIG. 4 is a flowchart of a cross-device control method according to an embodiment of the present application. As shown inFIG. 4, the cross-device control method includes, but is not limited to, steps S210 to S240. Steps S210 to S240 and the supplementary description centered on steps S210 to S240 are a description of the process of cross-device control from the perspective of the screen sharing device. As shown in FIG. 4, the cross-device control method includes the following steps.

Step S210: In a screen sharing connection state, receive, over a wireless network, first peripheral operation data sent by a screen sharing display device, where the first peripheral operation data is generated by a peripheral device of the screen sharing display device.

Step S220: Send the first peripheral operation data to a screen sharing source device through a wired interface, such that a screen sharing assistance application of the screen sharing source device converts the first peripheral operation data into second peripheral operation data based on a hardware parameter of the screen sharing display device and a hardware parameter of the screen sharing source device and sends the second peripheral operation data to the screen sharing device.

Step S230: Receive the second peripheral operation data, and encapsulate the second peripheral operation data based on a USB HID protocol to obtain a HID packet.

Step S240: Send the HID packet to the screen sharing source device, such that the screen sharing source device responds based on the HID packet.

In general, by using an existing data transmission channel in the screen sharing connection state, the first peripheral operation data generated from an interactive operation by a user on a peripheral device compatible with the screen sharing display device is sent to the screen sharing device. The screen sharing device forwards the first peripheral operation data to the screen sharing source device. The screen sharing assistance application in the screen sharing source device converts the first peripheral operation data based on the hardware parameter of the screen sharing display device and the hardware parameter of the screen sharing source device to obtain the second peripheral operation data adapted to its own hardware state and then sends the second peripheral operation data to the screen sharing device. The screen sharing device encapsulates the second peripheral operation data according to the USB HID protocol to obtain the HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

On the basis of the above-described embodiment, the cross-device control method further includes:
upon the establishment of a screen sharing connection, obtaining the hardware parameter of the screen sharing display device, and sending the hardware parameter of the screen sharing display device to the screen sharing source device for caching. The screen sharing source device caches the hardware parameter of the screen sharing display device, and can perform a quick conversion based on its own hardware parameter and the cached hardware parameter upon the first peripheral operation data is received.

On the basis of the above-described embodiment, the first peripheral operation data additionally carries the hardware parameter of the screen sharing display device. The screen sharing source device obtains the hardware parameter of the screen sharing display device upon obtaining the first peripheral operation data, and then performs a quick conversion accordingly in combination with its own hardware parameter.

On the basis of the above-described embodiment, the hardware parameter includes a display parameter. A conversion corresponding to the display parameter allows to ensure a corresponding accurate response to an operation detected between two devices with different display screen sizes.

On the basis of the above-described embodiment, the peripheral device includes one or more of a touch module, a mouse, or a keyboard.

On the basis of the above-described embodiment, the wired interface is either a USB Type-A interface or a USB Type-C interface.

The specific execution process and corresponding beneficial effects in this embodiment of the present application are described in the embodiment centered on FIG. 1, and will not be repeated herein.

FIG. 5 is a flowchart of a cross-device control method according to an embodiment of the present application. As shown in FIG. 5, the cross-device control method includes, but is not limited to, steps S310 to S330. Steps S310 to S330 and the supplementary description centered on steps S310 to S330 are a description of the process of cross-device control from the perspective of the screen sharing source device. As shown in FIG. 5, the cross-device control method includes the following steps.

Step S310: In a screen sharing connection state, receive first peripheral operation data from a screen sharing device through a wired interface, where the first peripheral operation data is received by the screen sharing device from a screen sharing display device through a wireless network connection, and the first peripheral operation data is generated by a peripheral device of the screen sharing display device.

Step S320: Convert the first peripheral operation data based on a hardware parameter of the screen sharing display device and a hardware parameter of the screen sharing source device to obtain second peripheral operation data and send the second peripheral operation data to the screen sharing device, such that the screen sharing device encapsulates the second peripheral operation data based on a USB HID protocol to obtain a HID packet and send the HID packet to the screen sharing source device.

Step S330: Respond based on the HID packet.

In general, by using an existing data transmission channel in the screen sharing connection state, the first peripheral operation data generated from an interactive operation by a user on a peripheral device compatible with the screen sharing display device is sent to the screen sharing device. The screen sharing device forwards the first peripheral operation data to the screen sharing source device. The screen sharing assistance application in the screen sharing source device converts the first peripheral operation data based on the hardware parameter of the screen sharing display device and the hardware parameter of the screen sharing source device to obtain the second peripheral operation data adapted to its own hardware state and then sends the second peripheral operation data to the screen sharing device. The screen sharing device encapsulates the second peripheral operation data according to the USB HID protocol to obtain the HID packet that is directly usable by the screen sharing source device, and sends the HID packet to the screen sharing source device for response. This enables cross-device control of the screen sharing source device on the screen sharing display device when the presentation is centered on the screen sharing display device as an information presentation focus, ensuring the continuity of multi-person communication and improving the effect of information transmission.

On the basis of the above-described embodiment, the cross-device control method further includes:
upon the establishment of a screen sharing connection, obtaining and caching the hardware parameter obtained by the screen sharing device from the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device includes:
   converting the first peripheral operation data based on a conversion relationship between the cached hardware parameter and the hardware parameter of the screen sharing source device to obtain the second peripheral operation data and send the second peripheral operation data to the screen sharing device.

The screen sharing source device caches the hardware parameter of the screen sharing display device, and can perform a quick conversion based on its own hardware parameter and the cached hardware parameter upon the first peripheral operation data is received.

On the basis of the above-described embodiment, the first peripheral operation data additionally carries the hardware parameter of the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device includes:
converting the first peripheral operation data based on a conversion relationship between the additionally carried hardware parameter and the hardware parameter of the screen sharing source device to obtain the second peripheral operation data and send the second peripheral operation data to the screen sharing device.

A conversion corresponding to the display parameter allows to ensure a corresponding accurate response to an operation detected between two devices with different display screen sizes.

The specific execution process and corresponding beneficial effects in this embodiment of the present application are described in the embodiment centered on FIG. 1, and will not be repeated herein.

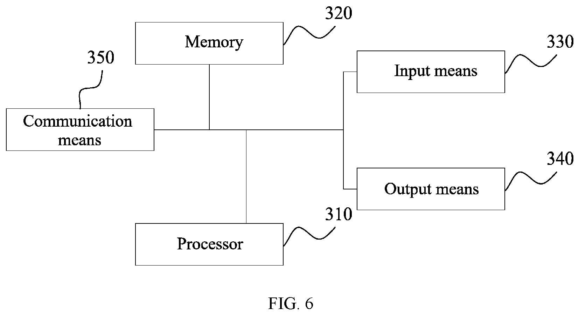

FIG. 6 is a schematic structural diagram of an electronic device according to an embodiment of the present application. A specific product form of the electronic device may be an interactive flat panel or a screen sharing device. As shown in FIG. 6, the electronic device includes a processor 310 and a memory 320. The interactive flat panel and the conference control device mentioned above are both electronic devices in terms of hardware architecture. A common product form of electronic device may further include an input means 330, an output means 340, and a communication means 350. There may be one or more processors 310 in the electronic device. For example, there is one processor 310 in FIG. 6. The processor 310, the memory 320, the input means 330, the output means 340, and the communication means 350 in the electronic device may be connected through a bus or in another manner, for example, are connected through the bus in FIG. 6.

As a computer-readable storage medium, the memory 320 may be used to store a software program, a computer-executable program, and a module, such as program instructions/modules corresponding to the cross-device control methods in the embodiments of the present application. The processor 310 executes various functional applications and data processing of the electronic device by running the software program, instructions, and modules stored in the memory 320, to implement the cross-device control method described above.

The memory 320 may mainly include a program storage area and a data storage area, where the program storage area may store an operating system and an application program required by at least one function; and the data storage area can store data created during the use of the electronic device, etc. In addition, the memory 320 may include a high-speed random access memory, and may further include non-volatile memory, such as at least one disk storage device, a flash memory device, or other non-volatile solid-state storage devices. In some embodiments, the memory 320 may further include memories remotely provided relative to the processor 310. The remote memories may be connected to the electronic device over a network. Examples of the above network include, but are not limited to, the Internet, intranets, local area networks, mobile communication networks, and combinations thereof.

The input means 330 may be used to receive network configuration information. The output means 340 may include a display device such as a display screen.

The electronic device may be used to perform any cross-device control method, and have corresponding functions and beneficial effects.

An embodiment of the present application further provides a storage medium containing computer-executable instructions. When executed by a computer processor, the computer-executable instructions are used to perform relevant operations in the cross-device control method provided in any embodiment of the present application, and have corresponding functions and beneficial effects.

Those skilled in the art should understand that the embodiments of the present application may be provided as a method, a system, or a computer program product.

Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer usable program code. The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams. These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more central processing units (CPUs), an input/output interface, a network interface, and a memory. The memory may include forms of a volatile memory, a random access memory (RAM), and/or a non-volatile memory and the like, such as a read-only memory (ROM) or a flash RAM in a computer-readable medium. The memory is an example of the computer-readable medium.

A computer-readable medium includes permanent and non-permanent, removable and non-removable media and may implement information storage by using any method or technology. Information may be modules of computer-readable instructions, data structures and programs, or other data. Examples of the computer storage medium include but are not limited to a phase-change random-access memory (PRAM), a static random-access memory (SRAM), a dynamic random-access memory (DRAM), other types of random-access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, disk storage or other magnetic storage devices, or any other non-transmission media that may be used to store information accessible by a computing device. According to the definitions herein, the computer-readable medium does not include transitory computer-readable media (transitory media), such as modulated data signals and carrier waves.

It should also be noted that, the terms "include", "comprise", or their any other variants are intended to cover a non-exclusive inclusion, so that a process, a method, a commodity, or a device that includes a list of elements not only includes those elements but also includes other elements which are not expressly listed, or further includes elements inherent to such a process, method, commodity, or device. If no more limitations are made, an element limited by "include a/an..." does not exclude other same elements existing in the process, the method, the article, or the device which includes the element.

Note that the above are merely preferred embodiments and technical principles used in the present application. Those skilled in the art will understand that the present application is not limited to the specific embodiments described herein, and that various obvious changes, readjustments, and substitutions can be made by those skilled in the art without departing from the scope of protection of the present application. Therefore, although the present application is described in detail through the above-described embodiments, the present application is not limited to the above-described embodiments, and may include more equivalent embodiments without departing from the concept of the present application. The scope of the present application depends on the scope of the appended claims.

## Claims

1. A cross-device control method, used for a screen sharing device, **characterized in that** the cross-device control method comprises:
in a screen sharing connection state, receiving, over a wireless network, first peripheral operation data sent by a screen sharing display device, wherein the first peripheral operation data is generated by a peripheral device of the screen sharing display device;
sending the first peripheral operation data to a screen sharing source device through a wired interface, such that a screen sharing assistance application of the screen sharing source device converts the first peripheral operation data into second peripheral operation data based on a hardware parameter of the screen sharing display device and a hardware parameter of the screen sharing source device and sends the second peripheral operation data to the screen sharing device;
receiving the second peripheral operation data, and encapsulating the second peripheral operation data based on a USB HID protocol to obtain a HID packet; and
sending the HID packet to the screen sharing source device, such that the screen sharing source device responds based on the HID packet.

2. The cross-device control method according to claim 1, **characterized in that** the cross-device control method further comprises:
upon the establishment of a screen sharing connection, obtaining the hardware parameter of the screen sharing display device, and sending the hardware parameter of the screen sharing display device to the screen sharing source device for caching.

3. The cross-device control method according to claim 1, **characterized in that** the first peripheral operation data additionally carries the hardware parameter of the screen sharing display device.

4. The cross-device control method according to any one of claims 1 to 3, **characterized in that** the hardware parameter comprises a display parameter.

5. The cross-device control method according to any one of claims 1 to 3, **characterized in that** the peripheral device comprises one or more of a touch module, a mouse, or a keyboard.

6. The cross-device control method according to any one of claims 1 to 3, **characterized in that** the wired interface is either a USB Type-A interface or a USB Type-C interface.

7. A cross-device control method, used for a screen sharing source device, **characterized in that** the cross-device control method comprises:
in a screen sharing connection state, receiving first peripheral operation data from a screen sharing device through a wired interface, wherein the first peripheral operation data is received by the screen sharing device from a screen sharing display device through a wireless network connection, and the first peripheral operation data is generated by a peripheral device of the screen sharing display device;
converting the first peripheral operation data based on a hardware parameter of the screen sharing display device and a hardware parameter of the screen sharing source device to obtain second peripheral operation data and send the second peripheral operation data to the screen sharing device, such that the screen sharing device encapsulates the second peripheral operation data based on a USB HID protocol to obtain a HID packet and send the HID packet to the screen sharing source device; and
responding based on the HID packet.

8. The according to claim 7, **characterized in that** the cross-device control method further comprises:
upon the establishment of a screen sharing connection, obtaining and caching the hardware parameter obtained by the screen sharing device from the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device comprising:
converting the first peripheral operation data based on a conversion relationship between the cached hardware parameter and the hardware parameter of the screen sharing source device to obtain the second peripheral operation data and send the second peripheral operation data to the screen sharing device.

9. The cross-device control method according to claim 7, **characterized in that** the first peripheral operation data additionally carries the hardware parameter of the screen sharing display device; and
correspondingly, converting the first peripheral operation data based on the hardware parameter of the screen sharing display device and the hardware parameter of the screen sharing source device to obtain the second peripheral operation data and send the second peripheral operation data to the screen sharing device comprises:
converting the first peripheral operation data based on a conversion relationship between the additionally carried hardware parameter and the hardware parameter of the screen sharing source device to obtain the second peripheral operation data and send the second peripheral operation data to the screen sharing device.

10. An electronic device, **characterized in that** the electronic device comprises:
one or more processors; and
a memory, configured to store one or more computer programs, wherein
when the one or more computer programs are executed by the one or more processors, the electronic device is caused to implement the cross-device control method according to any one of claims 1 to 9.

11. A computer-readable storage medium having a computer program stored thereon, **characterized in that** when the computer program is executed by a processor, the cross-device control method according to any one of claims 1 to 9 is implemented.
